# EUROPÄISCHE PATENTSCHRIFT

(11) **EP 2 922 733 B1**
(45) Veröffentlichungstag und Bekanntmachung des Hinweises auf die Patenterteilung: **04.01.2017**
(21) Anmeldenummer: 13795227.1
(22) Anmeldetag: 21.11.2013
(51) Int. Cl.: B60R 21/06

(54) **SCHUTZVORRICHTUNG FÜR EINEN RAUMABSCHNITT EINES KRAFTFAHRZEUGS**
PROTECTIVE DEVICE FOR A COMPARTMENT SECTION OF A MOTOR VEHICLE
DISPOSITIF DE PROTECTION DESTINÉ À UNE PARTIE D'ESPACE D'UN VÉHICULE AUTOMOBILE

(30) Priorität: 26.11.2012 DE 102012221586
(43) Veröffentlichungstag der Anmeldung: 30.09.2015
(73) Patentinhaber: BOS GmbH & Co. KG, 73760 Ostfildern (DE)
(72) Erfinder: MAIER, Matthias, 73733 Esslingen (DE); TRAN, Huan, 73760 Ostfildern (DE); SCHALLER, Wolfgang, 73770 Denkendorf (DE); WALTER, Herbert, 73061 Ebersbach (DE)
(74) Vertreter: Patentanwälte Ruff, Wilhelm, Beier, Dauster & Partner mbB
(86) Internationale Anmeldenummer: PCT/EP2013/074416
(87) Internationale Veröffentlichungsnummer: WO 2014/079950

(56) Entgegenhaltungen:
- EP-A2- 1 889 755
- DE-A1- 4 336 380

## Beschreibung

Die Erfindung betrifft eine Schutzvorrichtung für einen Raumabschnitt eines Kraftfahrzeuges mit einem zwischen einer kompakt abgelegten Stauposition und wenigstens einer zumindest teilweise flächig ausgezogenen Funktionsposition beweglichen flexiblen Flächengebilde, das an seinem in Auszugrichtung vorderen Stirnendbereich mit einem formstabilen Auszugprofil versehen ist, das an gegenüberliegenden Stirnseiten teleskopförmig in dem Auszugprofil begrenzt verschiebbar gelagerte Halteprofilabschnitte aufweist, die in Längsrichtung des Auszugprofiles nach außen durch eine Federanordnung beaufschlagt sind.

Als Schutzvorrichtung im Sinne der Erfindung sind Rückhaltevorrichtungen zur Abtrennung eines Laderaumes von einem Fahrgastraum, Laderaumabdeckungen zur etwa horizontalen Überdeckung eines nach oben offenen Laderaumes, Beschattungsvorrichtungen für Heck-, Seitenscheiben oder transparente Dachbereiche oder Restkofferraumabdeckungen vorgesehen, die zur Abtrennung eines Restkofferraumes relativ zu einem Verdeckaufnahmeraum für einen in einem Kofferraum versenkbaren, beweglichen Dachbereich, vorzugsweise in Form eines Verdecks oder eines aus formstabilen, aber zueinander schwenkbeweglich gelagerten Dachteilen bestehenden Klappdaches, dienen.

Eine Schutzvorrichtung in Form einer etwa vertikal zwischen einem Laderaum und einem Fahrgastraum aufspannbaren Rückhaltevorrichtung ist aus der DE 43 36 380 A1 bekannt. Die bekannte Rückhaltevorrichtung weist ein zwischen einer auf einer Wickelwelle aufgewickelten Ruheposition und einer aufgespannten Schutzposition beweglich gelagertes, flexibles Trennnetz auf. Das Trennnetz ist an seinem in Auszugrichtung vorderen Stirnendbereich mit einem formstabilen Auszugprofil versehen, das an seinen gegenüberliegenden Stirnseiten mit jeweils einem Hohlprofilbereich versehen ist, in dem ein Halteprofilabschnitt teleskopförmig verschiebbar gelagert ist, der an seinem außen liegenden Stirnendbereich mit einem pilzkopfförmigen Einhängehaken versehen ist. Der Halteprofilabschnitt auf jeder Stirnseite des Auszugprofiles ist in dem Hohlprofilbereich des Auszugprofiles begrenzt teleskopförmig verschiebbar gelagert und wird durch eine Druckfeder in Richtung seiner äußeren Endstellung federkraftbeaufschlagt. Ein Nachinnendrücken jedes Halteprofilabschnittes erfolgt daher gegen die Federkraft der Druckfeder. Die Beweglichkeit der Halteprofilabschnitte relativ zum Auszugprofil ist vorgesehen, um einen Toleranzausgleich bei einem Einhängen der Halteprofilabschnitte in dachseitigen Halterungen des Auszugprofiles zu ermöglichen. Zudem ist durch die Druckfedern gewährleistet, dass die Halteprofilabschnitte in eingehängtem Zustand über die Druckfeder vorgespannt sind, so dass Klappergeräusche reduziert werden.

Die DE 199 40 602 A1 offenbart eine etwa horizontal ausziehbare Laderaumabdeckung, die mit einem flexiblen Flächengebilde in Form einer Abdeckplane versehen ist. Die Abdeckplane weist an ihrem in Auszugrichtung vorderen Stirnendbereich ein formstabiles Auszugprofil auf, das an seinen gegenüberliegenden Stirnendbereichen mit teleskopförmig beweglichen Halteprofilabschnitten versehen ist, die pilzkopfartige Einhängebolzen umfassen. Diese Halteprofilabschnitte sind in gleicher Weise in Längsrichtung nach außen durch jeweils eine Druckfeder federkraftbeaufschlagt.

Aufgabe der Erfindung ist es, eine Schutzvorrichtung der eingangs genannten Art zu schaffen, die gegenüber dem Stand der Technik weiter verbesserte Einsatzmöglichkeiten aufweist.

Diese Aufgabe wird dadurch gelöst, dass jedem Halteprofilabschnitt eine zweite Federanordnung zugeordnet ist, die entgegengerichtet zu der ersten Federanordnung auf den Halteprofilabschnitt wirkt, und dass der Halteprofilabschnitt in unbelasteter Ruhestellung in einer Mittellage am Auszugprofil gehalten ist, aus der der Halteprofilabschnitt in entgegengesetzten Längsrichtungen nach innen oder nach außen relativ zum Auszugprofil verlagerbar ist. Dadurch ist es möglich, das Auszugprofil mit unterschiedlichen fahrzeugseitigen Halterungen zu verbinden, die unterschiedliche Abstände zueinander haben. Durch die erfindungsgemäße Lösung ist ein doppelt wirkender Toleranzausgleich gewährleistet, indem die Halteprofilabschnitte aus der Ruhelage heraus sowohl nach innen als auch nach außen verschoben werden können. In beiden Längsrichtungen ist eine entsprechende Federkraftbelastung gewährleistet, so dass die Halteprofilabschnitte in beiden Längsrichtungen bei der Herausbewegung aus der Ruhelage unter Vorspannung stehen. Die erfindungsgemäße Lösung ermöglicht die Sicherung des Auszugprofils in unterschiedlichen Funktionspositionen des flexiblen Flächengebildes, so dass die Variationsmöglichkeiten für den Einsatz einer Schutzvorrichtung verbessert sind. Die erfindungsgemäße Lösung eignet sich für alle Arten der zuvor beschriebenen Schutzvorrichtungen.

In Ausgestaltung der Erfindung sind die beiden Federanordnungen, die auf jeden Halteprofilabschnitt wirken, mit betragsmäßig gleich großen Federkräften ausgelegt. Die Federanordnungen können als Druck- oder als Zugfederanordnungen gestaltet sein.

In weiterer Ausgestaltung der Erfindung ist mit jedem Halteprofilabschnitt mittig zwischen den Federanordnungen ein axial fester Anschlagring verbunden, an dem sich beide Federanordnungen abstützen. Der Anschlagring am Halteprofilabschnitt definiert eine Mittellage für den Halteprofilabschnitt relativ zum Auszugprofil und relativ zu den beiden zugeordneten Federanordnungen.

In weiterer Ausgestaltung der Erfindung sind beide Federanordnungen als Schraubenfedern gestaltet, die an ihren dem Anschlagring zugewandten Endbereichen mit jeweils einem Stützring versehen sind, die einen an dem Auszugprofil axial fest angeordneten Anschlagsteg auf gegenüberliegenden Axialseiten flankieren und an dem Anschlagsteg axial abstützbar sind. Der Anschlagsteg ist im Bereich einer Mittellage des Halteprofilabschnittes vorgesehen und fester Bestandteil des Auszugsprofiles. Bei einer Verlagerung des Halteprofilabschnittes aus dieser Mittellage relativ zum Auszugprofil nach innen oder nach außen ist durch die Abstützung an dem Anschlagsteg zwangsläufig eine der beiden Federanordnungen abgekoppelt, so dass immer nur eine der beiden Federanordnungen eine Federbelastung auf den Halteprofilabschnitt ausübt. Die beiden Federanordnungen sind daher - funktional gesehen - parallel geschaltet.

In weiterer Ausgestaltung der Erfindung ist eine Innenkontur des Anschlagsteges des Auszugprofils in radialem Abstand zu einer Außenkontur des mit dem Halteprofilabschnitt beweglichen Anschlagringes angeordnet, um eine Axialbeweglichkeit des Anschlagringes an dem Anschlagsteg vorbei zu ermöglichen. Der mit dem Auszugprofil fest verbundene Anschlagsteg hält bei einer Verlagerung des Halteprofilabschnittes daher lediglich jeweils eine Federanordnung zurück. Der Halteprofilabschnitt selbst kann sich mit seinem Anschlagring axial an dem Anschlagsteg vorbei bewegen und wird durch den Anschlagsteg nicht behindert.

In weiterer Ausgestaltung der Erfindung sind die beiden Halteprofilabschnitte mittels energieabsorbierender Deformationselemente mit dem Auszugprofil axial in Wirkverbindung. Diese Ausgestaltung ist vorteilhaft für Schutzvorrichtungen in Form von Rückhaltevorrichtungen oder in Form von Laderaumabdeckungen. Denn im Crashfall, in dem das Auszugprofil stark gebogen wird, können sich die Halteprofilabschnitte relativ zu dem Auszugprofil unter gleichzeitigem Abbau von Deformationsenergie verlagern. Diese Funktion entspricht der Funktion der als Kraftbegrenzer dienenden energieabsorbierenden Deformationsanordnungen, wie sie aus der DE 43 36 380 A1 und der DE 199 40 602 A1 bekannt sind.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
Fig. 1 zeigt in perspektivischer Darstellung eine Ausführungsform einer erfindungsgemäßen Schutzvorrichtung in Form einer Rückhaltevorrichtung zwischen einem Laderaum und einem Fahrgastraum innerhalb eines Fahrzeuginnenraumes,
Fig. 2a eine Längsschnittdarstellung durch einen Teil eines Auszugprofiles eines Trennnetzes der Rückhaltevorrichtung nach Fig. 1,
Fig. 2b eine Draufsicht auf den Teilbereich nach Fig. 2a,
Fig. 3a den Längsschnitt nach Fig. 2a mit einem sich in seiner Mittellage befindlichen Halteprofilabschnitt und unter Weglassung eines Rohrabschnittes des Auszugprofiles,
Fig. 3b eine Draufsicht auf den Teilbereich nach Fig. 3a,
Fig. 4a eine Darstellung ähnlich den Fig. 2a und 3a in Verlagerung des Halteprofilabschnittes gegenüber dem Auszugprofil axial nach innen,
Fig. 4b eine Draufsicht auf den Teilbereich nach Fig. 4a und
Fig. 5 den Teilbereich nach Fig. 4b in vergrößerter, isometrischer Darstellung.

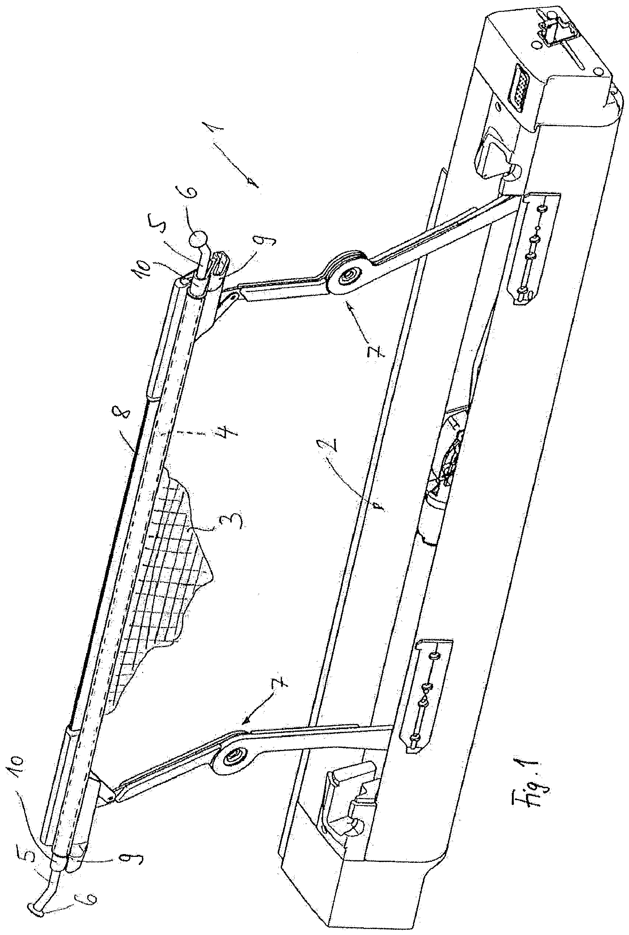

Eine Schutzvorrichtung in Form einer Rückhaltevorrichtung 1 nach Fig. 1 weist ein flexibles Flächengebilde in Form eines Trennnetzes 3 auf, das auf einer Wickelwelle auf- und abwickelbar gehalten ist. Die Wickelwelle ist in einem Kassettengehäuse 2 drehbar gelagert. Das Kassettengehäuse 2 ist im Betriebszustand innerhalb eines Fahrzeuginnenraumes hinter einer Rückenlehnenanordnung einer Fondsitzbank in Fahrzeugquerrichtung ausgerichtet und in Seitenbrüstungen eines Laderaumes lösbar montiert. Der Laderaum geht offen in einen Fahrgastraum des Fahrzeuginnenraumes über. Die Rückhaltevorrichtung 1 dient dazu, Ladegut zurückzuhalten, das bei einem Fahrzeugaufprall aus dem Laderaum in Richtung des Fahrgastraumes nach vorne geschleudert werden kann. Das Kassettengehäuse 2 kann zudem bei nach vorne umgeklappter Rückenlehnenanordnung auch auf der Rückseite der Rückenlehnenanordnung montiert werden. Das Trennnetz 3 weist eine so große Länge auf, dass es den Fahrzeuginnenraum in Fahrzeughochrichtung auch bei nach vorne umgeklappter Rückenlehnenanordnung bis zu einem Dachbereich des Fahrzeuginnenraumes hin überspannen kann. In umgeklappter Stellung der Rückenlehnenanordnung verlängert die Rückseite der Rückenlehnenanordnung einen Ladeboden des Laderaumes nach vorne. Um das Trennnetz 3 in beiden Montagepositionen des Kassettengehäuses 2, d.h. sowohl im Bereich der Seitenbrüstungen des Laderaumes als auch im Bereich der nach vorne umgeklappten Rückenlehnenanordnung in aufgespannter Funktionsposition dachseitig fixieren zu können, sind beiden Montagepositionen im Dachbereich korrespondierende dachseitige Halterungen zugeordnet.

Zur lösbaren Fixierung des Trennnetzes 3 in der aufgespannten Funktionsposition in den jeweiligen dachseitigen Halterungen weist das Trennnetz 3 an seinem in Auszugrichtung vorderen Stirnendbereich ein formstabiles Auszugprofil 4 auf, das sich über die gesamte Breite des Trennnetzes 3 erstreckt. Das Auszugprofil 4 ist wenigstens an seinen gegenüberliegenden Stirnseiten mit nach außen offenen Hohlräumen versehen, in denen jeweils ein Halteprofilabschnitt 5 teleskopförmig verschiebbar gelagert ist. Jeder Halteprofilabschnitt 5 ragt über die Stirnseite des Auszugprofiles 4 axial nach außen ab und ist an seinem außenliegenden Stirnende mit einem abgekröpften Bereich und einem pilzkopfförmigen Einhängebolzen 6 versehen. Mittels dieses Einhängebolzens 6 ist jeder Halteprofilabschnitt 5 in einer zugeordneten dachseitigen Halteaufnahme der dachseitigen Halterung lösbar verankerbar.

Um das Trennnetz 3 aus seiner innerhalb des Kassettengehäuses 2 auf der Wickelwelle aufgewickelten Ruheposition in die aufgespannte Funktionsposition zu überführen, ist eine Hubmechanik 7, 8 vorgesehen, die mittels eines Antriebs das Auszugprofil 4 anhebt und nach oben verfährt. Hierzu weist ein Hubprofil 8 der Hubmechanik 7, 8 zwei Mitnehmer 9 auf, die das Auszugprofil 4 an seinen gegenüberliegenden Stirnseiten untergreifen und nach oben mitnehmen.

Die gegenüberliegenden Halteaufnahmen der jeweiligen dachseitigen Halterung sind in den beiden unterschiedlichen Montagepositionen des Kassettengehäuses 2 in Fahrzeugquerrichtung mit unterschiedlichen Abständen zueinander fixiert. Diese unterschiedlichen Positionen sind durch die teleskopförmige Längsverlagerbarkeit beider Halteprofilabschnitte 5 relativ zum Auszugprofil 4 ausgleichbar. Denn durch entsprechendes axiales Nachinnenschieben oder Nachaußenschieben der Halteprofilabschnitte 5 können die Einhängebolzen 6 exakt fluchtend zu den entsprechenden dachseitigen Halteaufnahmen positioniert werden, so dass anschließend ein einfaches Eintauchen in die dachseitigen Halteaufnahmen ermöglicht ist.

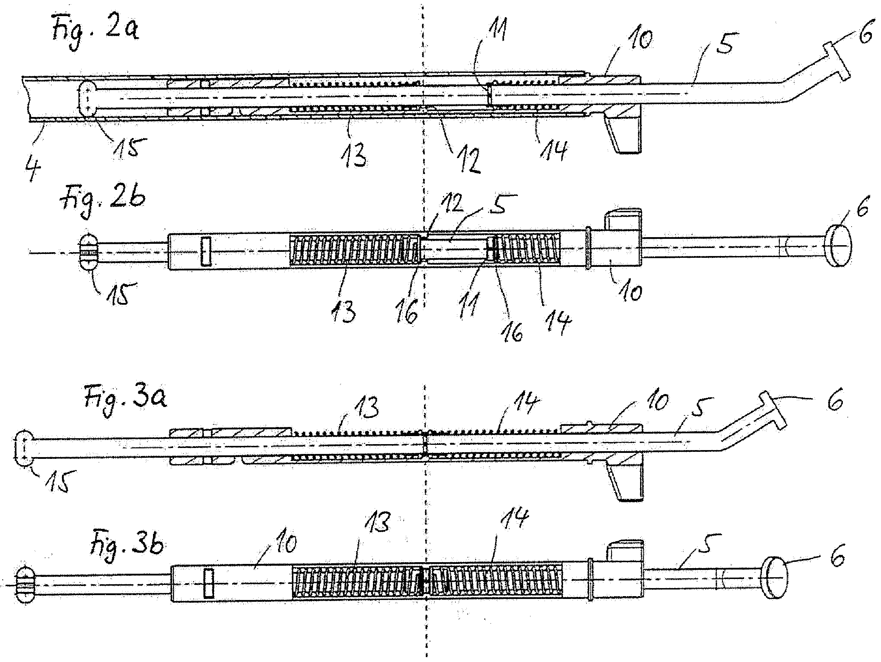

Zur teleskopförmigen Verschiebbarkeit jedes Halteprofilabschnittes 5 im entsprechenden Stirnendbereich des Auszugprofiles 4 weist jedes rohrförmige Auszugprofil 4 ein hohlprofilförmiges Einsatzstück 10 auf, in dem der Halteprofilabschnitt 5 linearbeweglich geführt ist. Der Hohlprofilabschnitt 10 ist in den Stirnendbereich des Auszugprofiles 4 eingesteckt und fest mit dem Auszugprofil 4 verbunden. In eingestecktem und fixiertem Zustand bildet der Hohlprofilabschnitt 10 einen Teil des Auszugprofiles 4. Der Hohlprofilabschnitt 10 ist zu beiden Axialseiten hin offen. Der Halteprofilabschnitt 5 ist nach Art einer zylindrischen Haltestange gestaltet und ragt sowohl axial nach innen als auch axial nach außen über den Hohlprofilabschnitt 10 hinaus. Axial nach innen ragt der Halteprofilabschnitt 5 in einen entsprechenden Hohlraum des Auszugprofiles 4 hinein, wie anhand der Fig. 2a erkennbar ist. Der Hohlprofilabschnitt 10 ist in einem Mittelbereich rinnenförmig ausgeführt und nach oben, d.h. radial nach außen zu einer Seite hin, offen, wie anhand der Fig. 2b, 3b, 4b und 5 erkennbar ist. Der zylindrische Halteprofilabschnitt 5 weist etwa mittig einen Anschlagring 11 auf, der axialfest und drehfest mit dem Halteprofilabschnitt 5 verbunden ist und radial von einem Außenmantel des Halteprofilabschnittes 5 nach außen abragt.

Der rinnenförmige Bereich des Hohlprofilabschnittes 10 weist einen Anschlagsteg 12 in Form einer Anschlagschulter auf, die in einer Mittellage des Halteprofilabschnittes 5 (siehe die gestrichelte Linie in den Fig. 2a bis 4b) auf gleicher axialer Höhe positioniert ist wie der Anschlagring 11 des Halteprofilabschnittes 5. Der schulterartige Anschlagsteg 12 ist in der Mitte des rinnenförmigen Bereiches und damit auf halber axialer Länge des rinnenförmigen Bereiches des Hohlprofilabschnittes 10 vorgesehen. Der Anschlagsteg 12 ist einstückiger Teil des Hohlprofilabschnittes 10 und ragt von einer Innenwandung des rinnenförmigen Bereiches des Hohlprofilabschnittes 10 radial nach innen. Der Anschlagsteg 12 ragt allerdings lediglich so weit radial nach innen, dass der vom Halteprofilabschnitt 5 aus radial nach außen abragende Anschlagring 11 berührungslos axial an dem Anschlagsteg 12 vorbeigeführt werden kann.

In den rinnenförmigen Bereich des Hohlprofilabschnittes 10 sind zwei zueinander identische Druckfederanordnungen 13, 14 eingebettet, die als Schraubendruckfedern gestaltet sind. Beide Druckfederanordnungen 13, 14 umgeben den Halteprofilabschnitt 5 koaxial. Die zur Mitte des Auszugprofiles 4 gewandte Druckfederanordnung 13 stützt sich an einer nicht näher bezeichneten axialen Stützschulter des rinnenförmigen Bereiches des Hohlprofilabschnittes 10 ab, die zur Mitte des Auszugprofiles 4 hin gewandt ist. Die axial außen liegende Druckfederanordnung 14 stützt sich mit ihrem axial äußeren Stirnende an einer korrespondierenden axial äußeren Stützschulter der axial außen liegenden Stirnseite des rinnenförmigen Bereiches des Hohlprofilabschnittes 10 am Hohlprofilabschnitt 10 ab. An den einander zugewandten Stirnseiten beider Druckfederanordnungen 13, 14 weist jede Druckfederanordnung 13, 14 einen Stützring 16 auf, dessen Durchmesser derart gestaltet ist, dass sich jeder Stützring 16 an dem Anschlagsteg 12 des Hohlprofilabschnittes 10 abstützen kann. Außerdem sind die Stützringe 16 derart gestaltet, dass diese sich axial auch an dem Anschlagring 11 des Halteprofilabschnittes 4 abstützen können.

Ein axial nach innen gewandtes stirnseitiges Ende des Halteprofilabschnittes 5 ist mit einem radial nach außen ragenden Deformationselement 15 versehen, das im Crashfall mit einem korrespondierenden energieabsorbierenden Deformationselement des Auszugprofiles 4 in Kontakt gelangt und bei einer teleskopförmigen Axialbewegung des Halteprofilabschnittes 5 relativ zum Auszugprofil 4 Aufprallenergie durch entsprechende Deformationsenergie abbaut. Diese Funktion entspricht der Funktion der energieabsorbierenden Deformationsanordnung, wie sie aus der DE 199 40 602 A1 bekannt ist. Die gleiche Funktion ist auch aus der DE 43 36 380 A1 bekannt.

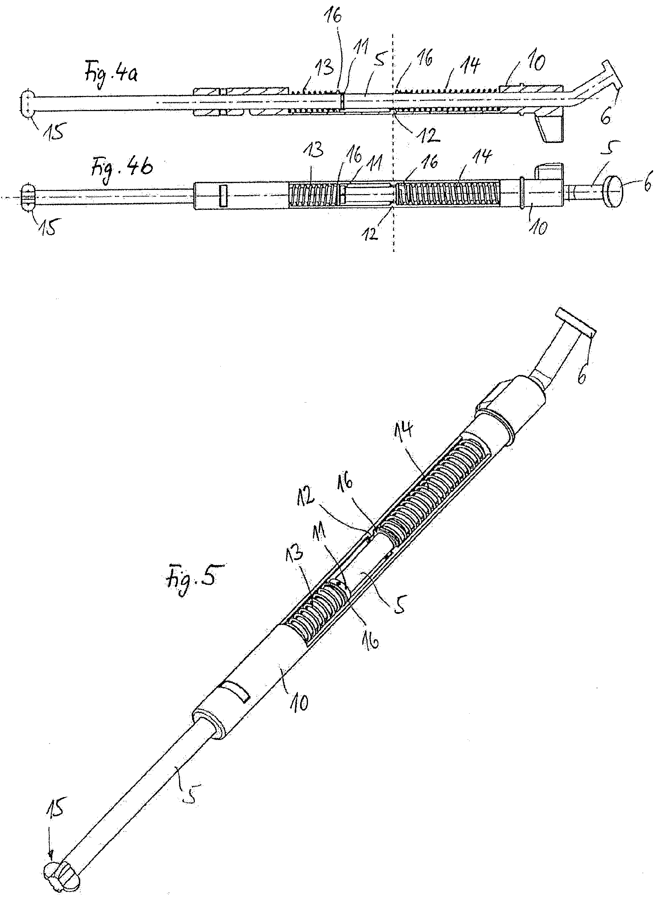

Bei einer teleskopförmigen Axialverlagerung des Halteprofilabschnittes 5 relativ zum Auszugprofil 4 und damit relativ zum Hohlprofilabschnitt 10 aus der Mittellage heraus (siehe Fig. 3a und 3b) nimmt der Anschlagring 11 die jeweilige Druckfederanordnung 13 oder 14 axial nach außen (Fig. 2a, 2b) oder axial nach innen (Fig. 4a, 4b) zwangsläufig mit, wodurch die entsprechende Druckfederanordnung 13 oder 14 komprimiert wird. Die jeweils andere Druckfederanordnung 13, 14 wird durch den mit dem Auszugprofil 4 axialfesten Anschlagsteg 12 in der vorgespannten Ausgangslage gehalten, in der sich die Druckfederanordnung 13 oder 14 zwischen der stirnseitigen Stützschulter des Hohlprofilabschnittes 10 und dem mittigen Anschlagsteg 12 erstreckt. Auf den entsprechend axial verlagerten Halteprofilabschnitt 5 wirkt daher jeweils immer lediglich die Federkraft der Druckfederanordnung 13 oder 14, die aufgrund der Axialverlagerung komprimiert wird. Beide Druckfederanordnungen 13, 14 sind beim dargestellten Ausführungsbeispiel identisch dimensioniert. In unbelasteter Ruhelage wird der Halteprofilabschnitt 5 zwangsläufig in der Mittellage derart gehalten, dass der Anschlagring 11 sich auf axialer Höhe des Anschlagsteges 12 befindet. Sowohl der Anschlagring 11 als auch der Anschlagsteg 12 weisen zumindest weitgehend die gleiche axiale Dicke auf, so dass der Halteprofilabschnitt 5 in der Mittellage axial spielfrei durch die Druckfederanordnungen 13, 14 gehalten wird.

## Patentansprüche

1. Schutzvorrichtung für einen Raumabschnitt eines Kraftfahrzeugs mit einem zwischen einer kompakt abgelegten Stauposition und wenigstens einer zumindest teilweise flächig ausgezogenen Funktionsposition beweglichen flexiblen Flächengebilde, das an seinem in Auszugrichtung vorderen Stirnendbereich mit einem formstabilen Auszugprofil versehen ist, das an gegenüberliegenden Stirnseiten teleskopförmig in dem Auszugprofil begrenzt verschiebbar gelagerte Halteprofilabschnitte aufweist, die in Längsrichtung des Auszugprofiles nach außen durch eine Federanordnung beaufschlagbar sind, **dadurch gekennzeichnet, dass** jedem Halteprofilabschnitt (5) eine zweite Federanordnung (13, 14) zugeordnet ist, die entgegengerichtet zu der ersten Federanordnung (13, 14) auf den Halteprofilabschnitt (5) wirkt, und dass der Halteprofilabschnitt (5) in unbelasteter Ruhestellung in einer Mittellage am Auszugprofil (4) gehalten ist, aus der der Halteprofilabschnitt (5) in entgegengesetzten Längsrichtungen nach innen oder nach außen relativ zum Auszugprofil (4) verlagerbar ist.

2. Schutzvorrichtung nach Anspruch 1, **dadurch gekennzeichnet, dass** die beiden Federanordnungen (13, 14), die auf jeden Halteprofilabschnitt (5) wirken, mit betragsmäßig gleich großen Federkräften ausgelegt sind.

3. Schutzvorrichtung nach Anspruch 1 oder 2, **dadurch gekennzeichnet, dass** an jedem Halteprofilabschnitt (5) mittig zwischen den Federanordnungen (13, 14) ein axialfester Anschlagring (11) angeordnet ist, an dem sich beide Federanordnungen (13, 14) abstützen können.

4. Schutzvorrichtung nach einem der vorhergehenden Ansprüche, **dadurch gekennzeichnet, dass** beide Federanordnungen (13, 14) als Schraubenfedern gestaltet sind, die an ihren dem Anschlagring (11) zugewandten Endbereichen mit jeweils einem Stützring (16) versehen sind, die einen an dem Auszugprofil (4) axial fest angeordneten Anschlagsteg (12) auf gegenüberliegenden Axialseiten flankieren und an dem Anschlagsteg (12) axial abstützbar sind.

5. Schutzvorrichtung nach Anspruch 4, **dadurch gekennzeichnet, dass** eine Innenkontur des Anschlagsteges (12) des Auszugprofiles (4) in radialem Abstand zu einer Außenkontur des mit dem Halteprofilabschnitt (5) beweglichen Anschlagringes (11) angeordnet ist, um eine Axialbeweglichkeit des Anschlagringes (11) an dem Anschlagsteg vorbei zu ermöglichen.

6. Schutzvorrichtung nach Anspruch 1, **dadurch gekennzeichnet, dass** die beiden Halteprofilabschnitte (5) mittels energieabsorbierender Deformationselemente (15) mit dem Auszugprofil (4) axial in Wirkverbindung sind.

## Claims

1. Protective device for a compartment section of a motor vehicle, with a flexible sheetlike structure which is movable between a compactly stored stowed position and at least one functional position where the sheetlike structure is at least partially extended in a planar manner, and is provided, at the face end region thereof which is in front in the pull-out direction, with a dimensionally stable pull-out profile, which profile includes, on opposite end faces, holding profile sections telescopically mounted to be shiftable to a limited extent within the pull-out profile, and a spring arrangement can act upon the holding profile sections in the longitudinal direction of the pull-out profile outwards, **characterized in that** a second spring arrangement (13, 14) is assigned to each holding profile section (5) and acting on the holding profile section (5) in a direction opposite to the first spring arrangement (13, 14), and **in that** the holding profile section (5) in an unloaded rest position is held in a central location on the pull-out profile (4), from which location the holding profile section (5) is displaceable in opposite longitudinal directions inwards or outwards relative to the pull-out profile (4).

2. Protective device according to claim 1, **characterized in that** the two spring arrangements (13, 14) acting on each of the holding profile sections (5) are designed with spring forces of equal strength in value.

3. Protective device according to claim 1 or 2, **characterized in that** on each of the holding profile sections (5), centrally between the spring arrangements (13, 14), an axially fixed stop ring (11) is disposed to allow supporting of both the spring arrangements (13, 14).

4. Protective device according to any of the preceding claims, **characterized in that** both the spring arrangements (13, 14) are helical springs, each provided with a respective support ring (16) on their end regions facing the stop ring (11), said springs flanking a stop ridge (12), which is disposed axially fixed to the pull-out profile (4), on opposite axial sides and being capable of taking axial support on the stop ridge (12).

5. Protective device according to claim 4, **characterized in that** an inner contour of the stop ridge (12) of the pull-out profile (4) is disposed at a radial distance to an outer contour of the stop ring (11) movable together with the holding profile section (5), in order to allow axial movement of the stop ring (11) past the stop ridge.

6. Protective device according to claim 1, **characterized in that** the two holding profile sections (5) are in axial operative connection to the pull-out profile (4) by means of energy absorbing deformation elements (15).

## Revendications

1. Dispositif de protection destiné à une partie d'espace d'un véhicule automobile, comprenant une structure plane flexible qui est mobile entre une position de rangement entreposée de manière compacte et au moins une position fonctionnelle au moins partiellement sortie en étendue, la structure plane étant pourvue à son extrémité frontale avant dans la direction de sortie d'un profilé de sortie dimensionnellement stable, ledit profilé de sortie présentant, sur des faces frontales opposées, des parties profilées de retenue supportées de manière coulissant de façon télescopique et limitée dans le profilé de sortie, et par le biais d'un agencement de ressort force peut être appliquée sur les parties profilées de retenue dans la direction longitudinale du profilé de sortie vers l'extérieur, **caractérisé en ce que** un deuxième agencement de ressort (13, 14) est assigné à chacune des parties profilées de retenue (5), agissant sur la partie profilée de retenue (5) dans une direction opposée au premier agencement de ressort (13, 14), et **en ce que** la partie profilée de retenue (5) en état de repos non-contraint est retenue sur le profilé de sortie (4) dans une position centrale, à partir de laquelle la partie profilée de retenue (5) est déplaçable dans des directions longitudinales opposées vers l'intérieur ou vers l'extérieur par rapport au profilé de sortie (4).

2. Dispositif de protection selon la revendication 1, **caractérisé en ce que** les deux agencements de ressort (13, 14), agissant sur chacune des parties profilées de retenue (5), sont conçus avec des forces du ressort égaux en valeur.

3. Dispositif de protection selon la revendication 1 ou 2, **caractérisé en ce que** sur chacune des parties profilées de retenue (5), au milieu entre les agencements de ressort (13, 14), est disposée une bague d'arrêt (11) fixée axialement sur laquelle les deux agencements de ressort (13, 14) peuvent s'appuyer.

4. Dispositif de protection selon l'une quelconque des revendications précédentes, **caractérisé en ce que** les deux agencements de ressort (13, 14) sont conçus sous forme de ressorts hélicoïdaux, pourvus d'une bague de support (16) respective sur ses extrémités faisant face à la bague d'arrêt (11), lesdits ressorts flanquant une arête de butée (12) disposée axialement fixée sur le profilé de sortie (4) sur des faces axiales opposées et étant apte à s'appuyer axialement sur l'arête de butée (12).

5. Dispositif de protection selon la revendication 4, **caractérisé en ce qu'**un contour interne de l'arête de butée (12) du profilé de sortie (4) est disposé à une distance radiale d'un contour externe de la bague d'arrêt (11) mobile avec la partie profilée de retenue (5) pour permettre une mobilité axiale de la bague d'arrêt (11) en passant l'arête de butée.

6. Dispositif de protection selon la revendication 1, **caractérisé en ce que** les deux parties profilées de retenue (5) sont axialement en liaison active avec le profilé de sortie (4) par le biais d'éléments de déformation (15) absorbant l'énergie.
